# EUROPÄISCHE PATENTSCHRIFT

(11) **EP 2 137 486 B1**
(45) Veröffentlichungstag und Bekanntmachung des Hinweises auf die Patenterteilung: **18.08.2010**
(21) Anmeldenummer: 08736211.7
(22) Anmeldetag: 14.04.2008
(51) Int. Cl.: G01B 3/34, G01B 5/08

(54) **MESSLEHRE UND VERFAHREN ZUR BESTIMMUNG DES DURCHMESSERS ODER DER QUERSCHNITTSFLÄCHE EINES IN DER QUERSCHNITTSFORM VERÄNDERLICHEN OBJEKTS**
MEASURING GAUGE AND METHOD FOR DETERMINING THE DIAMETER OR CROSS-SECTIONAL AREA OF AN OBJECT WHOSE CROSS-SECTIONAL SHAPE IS ADJUSTABLE
GABARIT DE MESURE ET PROCÉDÉ DE DÉTERMINATION DU DIAMÈTRE OU DE LA SURFACE DE LA SECTION TRANSVERSALE D'UN OBJET DONT LA FORME DE LA SECTION TRANSVERSALE SE MODIFIE

(30) Priorität: 16.04.2007 DE 102007018199
(43) Veröffentlichungstag der Anmeldung: 30.12.2009
(73) Patentinhaber: Rennsteig Werkzeuge GmbH, 98547 Viernau (DE)
(72) Erfinder: LUTZE, Peter, 98587 Bermbach (DE)
(74) Vertreter: Engel, Christoph Klaus
(86) Internationale Anmeldenummer: PCT/EP2008/054514
(87) Internationale Veröffentlichungsnummer: WO 2008/125666

(56) Entgegenhaltungen:
- GB-A- 227 381
- US-A- 2 374 830
- US-A1- 2005 229 418

## Beschreibung

Die Erfindung betrifft eine Messlehre und ein Verfahren zur Bestimmung des Durchmessers oder der Querschnittsfläche eines in seiner Querschnittsform veränderlichen Objektes, wie beispielsweise eines Litzenleiters.

Ein Litzenleiter ist ein aus dünnen Einzeldrähten bestehender und daher leicht zu biegender elektrischer Leiter. Die Einzeldrähte der Litze (bis mehrere hundert) sind meist von einer gemeinsamen Isolierhülle umschlossen.

Litzenleitungen werden vorrangig dort angewendet, wo eine häufige Bewegung oder Rüttelbeanspruchung stattfindet - das sind zum Beispiel Maschinen, Fahr- und Flugzeuge und Roboter - oder wenn ein mobiles Gerät versorgt werden muss, wie beispielsweise elektrische Handgeräte, steckbare Netzzuleitungen, Mikrofon- und Lautsprecherkabel. Je nach erforderlicher Flexibilität und Beanspruchungsgrad verwendet man fein- oder feinstdrähtige Litzenleitungen.

In den jeweiligen Anwendungen werden die Leiter konfektioniert, das heißt mit Aderendhülsen, Kabelschuhen, Steckverbindern oder dergleichen versehen.

Diese Konfektionierung wird üblicherweise durch das so genannte Crimpen vorgenommen. Dabei wird eine kraftschlüssige, homogene, nicht lösbare Verbindung zwischen dem Leiter und dem Verbindungselement hergestellt, die eine hohe elektrische und mechanische Sicherheit gewährleistet. Überall da, wo die Verlegung eines vorkonfektionierten Kabels nicht leicht möglich ist, wird das Kabel alleine bis zum Zielort verlegt und erst dort ein elektrisches Kontaktteil, meist durch Crimpen, an das Ende der Leitung angebracht. Mit Hilfe einer Crimpzange werden Stecker und Kabel kraftschlüssig verbunden, wobei zumeist eine erste Crimpverbindung im Isolationsbereich und eine zweite Crimpverbindung am abisolierten Ende des Kabels zur Herstellung der elektrischen Verbindung erzeugt wird.

Neben der Verbindungssicherheit wird durch das Crimpen auch eine erhebliche Vereinfachung der Handhabung erreicht. Die Verbindung wird dabei durch Druck erzeugt, wobei exakt auf Verbindungsteil und Leiterquerschnitt abgestimmte Crimpprofile eine genau vorgegebene Verformung von Anschlusselement und Leiter bewirken.

Werden Kabel erst nach der Verlegung konfektioniert, d. h. mit den benötigten Anschlüssen versehen, so kann es insbesondere bei großen Kabelbäumen mit vielen unterschiedlichen Leiterquerschnitten dazu kommen, dass von den vor Ort eingesetzten Fachkräften für die jeweiligen Kabel bzw. Litzen nicht die passenden Crimpprofile ausgewählt werden können, weil insbesondere bei kleineren Leiterquerschnitten eine Abschätzung des Leiterquerschnittes per Inaugenscheinnahme nicht einfach möglich ist.

Die Folge sind entweder zu lockere elektrische und/oder mechanische Verbindungen, die sich selbständig lösen, oder unvollständige Crimpverbindungen, bei denen ein Teil des nicht formschlüssig mit dem Kontakt verbundenen Litzenleiters aufdröselt, und dadurch unter Umständen zu Kurzschlüssen im Kabelbaum führen können.

Eine Messung des Leiterdurchmessers, beispielsweise mit einem Messschieber, ergibt aufgrund der Beweglichkeit des Litzenleiters eine fehlerhafte Messung, die Einzeldrähte werden von den Schenkeln des Messschiebers gegeneinander verschoben und flach zusammengedrückt, so dass eine präzise Ermittlung der Querschnittsfläche nicht möglich ist.

Eine Messung des Durchmessers der Leitung mit Isolierung wäre möglich, jedoch kann daraus nicht zwingend auf den Leiterquerschnitt geschlossen werden, da bei verschieden Leitungstypen unterschiedliche Isolierungsstärken vorliegen können.

Die GB 227 381 zeigt eine Messlehre zur Bestimmung eines Drahtdurchmessers. Die Lehre besitzt zwei gegenüberliegende Platten, von denen die eine Platte eine glatte Anlagekante und die andere eine gestufte Anlagekante aufweist. Die Stufen entsprechen üblichen Drahtdurchmessern, sodass der Durchmesser eines eingelegten Drahtes auf einer Skala abgelesen werden kann.

Die US 2005/229418 A1 beschreibt ein zweiteiliges Steckmodul zur Durchmesserbestimmung insbesondere von Kopfhaaren. Die beiden Teile des Steckmoduls besitzen je einen linear verlaufenden Schlitz. Durch Verschiebung der beiden Schlitze entsteht eine rechteckige Öffnung variabler Größe, mit welcher die Querschnittsfläche eines eingelegten Haarbüschels bestimmt werden kann.

Die US 2 374 830 A zeigt eine Messlehre zur Bestimmung der Dicke von Stricknadeln und anderen Objekten mit kreisförmigem Querschnitt. Die Messlehre besteht aus einem Gehäuse mit einem Kegelzapfenschlitz, durch welchen das Objekt durchgeführt werden kann. Die Anzeige umfasst eine skala und ein Anzeigeelement, welches mit Hilfe einer Feder gegen das zu messende Objekt gedrückt wird, um das Ablesen des Durchmessers auf der Skala zu gestatten.

Die JP 04-118 501 AA stellt eine Lösung zur Überprüfung der Querschnittsform eines Gegenstandes dar. Das Messinstrument besteht aus oberer und unterer Messleiste zwischen denen das Messobjekt eingelegt wird, wobei die Messung durch zwei ineinandergreifende Berührungsflächen im Werkzeug durchgeführt wird.

Der Erfindung liegt die Aufgabe zugrunde, eine Vorrichtung zur Bestimmung des Durchmessers und/oder der Querschnittsfläche eines bei Krafteinwirkung in der Querschnittsform veränderlichen Objektes bereitzustellen. Insbesondere solle eine einfache und präzise Bestimmung des Leiterquerschnitts von Litzen ermöglicht werden.

Die Aufgabe wird erfindungsgemäß durch eine Messlehre mit den Merkmalen des Anspruchs 1 oder des Anspruchs 15 und durch ein Verfahren mit den Merkmalen des Anspruchs 14 gelöst.

Die Vorteile der Erfindung sind insbesondere darin zu sehen, dass eine einfache und schnelle Ermittlung der tatsächlichen Leiterquerschnitte durch den Installateur vor Ort erfolgen kann, so dass eine falsche Konfektionierung der Leiter verhindert und damit auch technische Ausfälle vermieden werden können.

Erfindungsgemäß umfasst eine Messlehre mindestens eine erste Messscheibe und eine zweite Messscheibe. Die erste Messscheibe weist einen Schlitz auf, welcher eine Spiralform hat. Die Spirale verjüngt sich entlang ihres Verlaufes in ihrer Breite, entweder von innen nach außen oder von außen nach innen. Die zweite Messscheibe weist ebenfalls einen Schlitz auf welcher sich in der gleichen Richtung verjüngt, wie der Schlitz in der ersten Scheibe. Der Schlitz der zweiten Messscheibe hat einen stetigen Verlauf, ausgehend von der Zentrumsnähe der Messscheibe nach außen hin. Dabei kann der Schlitz der zweiten Messscheibe als Gerade oder ebenfalls als Spirale ausgeführt sein.

Die Breite der Schlitze in den Messscheiben erstreckt sich dabei mindestens vom größten möglichen Durchmesser einer zu ermittelnden Querschnittsfläche bis zum kleinsten zu vermessenden Durchmesser.

Die Messscheiben werden übereinander koaxial derart angeordnet, dass sich die Schlitze zu einer verbleibenden Öffnung überdecken. Werden die Messscheiben nun gegeneinander verdreht, so ändert die Öffnung ihre lichte Größe und auch ihre Lage.

Vorzugsweise ist der Schlitz der zweiten Messscheibe deckungsgleich zu dem der ersten Messscheibe, und die Messscheiben sind spiegelsymmetrisch angeordnet, wodurch sich im Überdeckungsbereich eine im Wesentlichen rombenförmige Öffnung ergibt.

In einer besonders bevorzugten Ausführungsform der Erfindung wird eine dritte Messscheibe koaxial mit den beiden anderen Messscheiben angeordnet, welche einen radial verlaufenden Schlitz aufweist, welcher sich in der gleichen Richtung verjüngt, wie die Schlitze der beiden andern Scheiben. Verdreht man nun die erste und die zweite Messscheibe gegeneinander, so hat die verbleibende Öffnung im Bereich der Überdeckung der Schlitze aller drei Scheiben im Wesentlichen eine Sechseckform.

Es liegt auch im Rahmen der Erfindung, weitere Messscheiben vorzusehen. Diese haben dann vorzugsweise eine Spiralform mit einer anderen Länge. Durch die Verwendung weiterer Messscheiben kann die verbleibende Öffnung weiter an eine Kreisform angenähert werden. Allerdings ist dann zu beachten, dass die Verdrehung der Scheiben untereinander immer so erfolgt, dass überhaupt eine durchgehende Öffnung frei bleibt. Gegebenenfalls muss dazu eine entsprechende Übersetzung bzw. ein Getriebe zwischen den einzelnen Scheiben vorgesehen werden.

Zur Bestimmung der Querschnittsfläche oder des Durchmessers eines in seiner Querschnittsform veränderlichen Objektes wird zunächst die Öffnung auf eine solche Größe eingestellt, dass das Objekt in die Öffnung eingeführt werden kann. Anschließend werden die Messscheiben gegeneinander verdreht, bis das Objekt fest in der Öffnung steckt. Durch die sich von allen Seiten verkleinernde Öffnung wird das zu vermessende Objekt zentrisch zusammengedrückt, so dass mit guter Näherung der Durchmesser des Objektes ermittelt werden kann, woraus dann rechnerisch bzw. durch eine entsprechende Skalierung die Querschnittsfläche ermittelt werden kann.

Das ermittelte Maß, also der Durchmesser oder die jeweils zugehörige Querschnittsfläche kann an einer Maßverkörperung abgelesen werden, welche auf einer außen liegenden Messscheibe entlang des Schlitzes oder am Rand aufgetragen ist. Die Maßverkörperung wird umso genauer, je länger der Schlitz ist, deshalb ist die Maßverkörperung vorzugsweise auf der ersten Messscheibe vorgesehen. Die Ablesung erfolgt an einem Abschnitt der Spirale, in der das Objekt aus der Öffnung herausragt oder an einer Markierung, welche der auf dem Rand aufgetragenen Maßverkörperung gegenüberliegt.

Als besonders vorteilhaft bei einer bevorzugten Ausführungsform hat es sich erwiesen, einen Antrieb vorzusehen, der eine gleichmäßige relative Verdrehung der Messscheiben zueinander gestattet. Je nach Anwendungsgebiet der Messlehre kann dies ein manueller Antrieb, beispielsweise mit einem Handrädchen, oder auch ein maschineller Antrieb mit einem entsprechenden Getriebe sein.

In einer sehr einfachen Ausführungsform sind Halteabschnitte am äußeren Umfang der Messscheiben angeordnet, wodurch ein händisches Verdrehen der Scheiben ermöglicht wird. Vorzugsweise ist auch hier ein Getriebe vorzusehen, welches die relative Verdrehung der Messscheiben steuert.

Die Messscheiben sind in einer bevorzugten Ausführungsform aus Kunststoff gefertigt. Andere Materialien, wie beispielsweise Aluminium oder Stahl sind aber ebenso denkbar.

Als mögliche Anwendung für die Erfindung wird nachfolgend auf die Ermittlung des Leiterquerschnittes einer Litzenleitung eingegangen, welche im Sinne der Erfindung ein in der Querschnittsform veränderliches Objekt darstellt. Die Erfindung ist jedoch ausdrücklich nicht auf dieses Anwendungsgebiet beschränkt. Beispielsweise eignet sich die Messlehre auch für die Bestimmung des Durchmessers von Lichtwellenleitern, wobei besonders auch bei dünnen Adern eine Beschädigung sicher vermieden wird.

In einer weiteren bevorzugten Ausführungsform der Erfindung umfasst die Messlehre eine Maßverkörperung für die Querschnittsfläche und eine weitere Maßverkörperung, auf der der Durchmesser aufgetragen ist. Dies ermöglich die besonders einfache Ermittlung von Leiterquerschnitt und Gesamtdurchmesser der Litzenleitung. Da Litzenleitungen bei gleichem Leiterquerschnitt verschieden starke Isolierungen aufweisen können, sind auch unterschiedliche Crimpkontakte erforderlich. Die Messung von Leiterquerschnitt und Isolierung, bzw. Gesamtdurchmesser ermöglicht einfach die richtige Wahl des zu verwendenden Crimpkontaktes.

Weiterhin kann eine der Messscheiben einen weitern Durchbruch umfassen, der beispielsweise scharfkantig gestaltet ist, so dass die Messlehre durch Verdrehen der Messscheiben auch zum Abschneiden und/oder Abmanteln der Litzenleitung verwendet werden kann.

Ebenso ist es denkbar, die erfindungsgemäße Messlehre direkt in eine Crimpzange zu integrieren, oder damit eine automatische Erkennung der Litzenleitung in einer Crimpmaschine zu realisieren, so dass beispielsweise nach Einlegen der Leitung eine Messung und anschließende automatische Auswahl des benötigten Crimpkontaktes erfolgt.

Es ist auch vorteilhaft, wenn die bei manuell betätigten Messscheiben die zur Verfügung stehende Scheibenfläche, die nicht für das Anbringen der Maßverkörperung benötigt wird, als Werbefläche genutzt wird.

Wie sich aus den zuvor gemachten Erläuterungen ergibt, ist es für die Erfindung wichtig, dass zwei Scheiben zueinander verlagert werden, um den Querschnitt einer Öffnung zu verändern, welche durch zwei in den Messscheiben verlaufende, sich verjüngende Schlitze im Überdeckungsbereich belassen wird. Obwohl die Handhabung von zwei oder mehr drehbar angeordneten Scheiben vorteilhaft ist, kann dieses Prinzip auch bei linear zu verwendenden Scheiben angewandt werden. Eine entsprechende Ausführungsform ist im beigefügten Anspruch 15 näher definiert.

Eine bevorzugte Ausführungsform der Erfindung ist in den Figuren dargestellt und wird nachfolgend näher erläutert.

Es zeigen:
- Fig. 1:: eine Messlehre zur Bestimmung eines Leiterquer- schnittes in räumlicher Ansicht;
- Fig. 2:: die Messlehre gemäß Fig. 1 in einer Querschnittsdar- stellung;
- Fig. 3:: eine erste Messscheibe der Messlehre in Draufsicht und in Seitenansicht;
- Fig. 4:: eine dritte Messscheibe mit radial verlaufendem Schlitz in Draufsicht und Querschnittsansicht;
- Fig. 5:: eine zweite Messscheibe in Draufsicht;
- Fig. 6:: die Messlehre gemäß Fig. 1 in Draufsicht mit Darstellung einer Maßverkörperung.

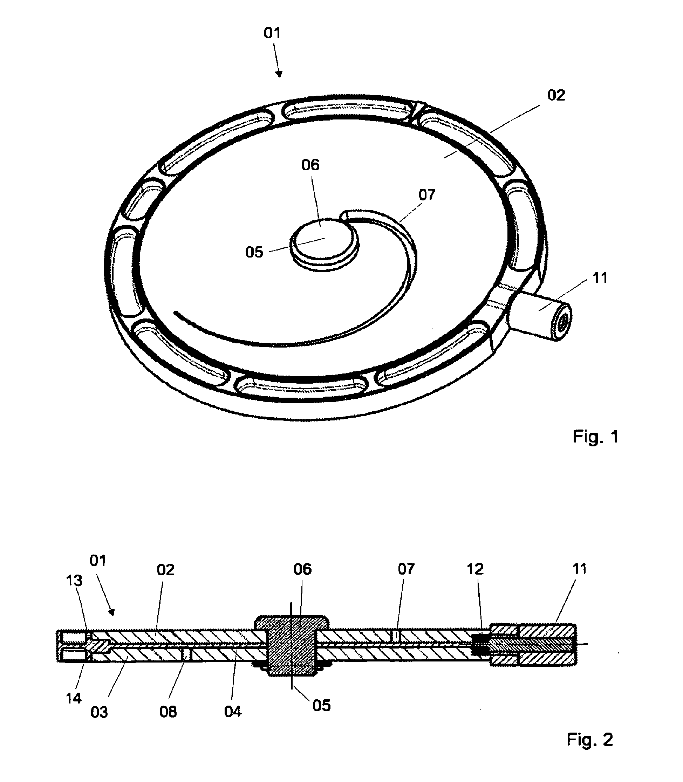

Fig. 1 zeigt eine räumliche Darstellung einer besonders bevorzugten Ausführungsform einer erfindungsgemäßen Messlehre 01. Die hier dargestellte Messlehre 01 ist vorzugsweise zur Bestimmung des Leiterquerschnittes einer Litzenleitung geeignet, weshalb in der zugehörigen Beschreibung nur auf diese Verwendung Bezug genommen wird. Weitere Verwendungsmöglichkeiten kann der Fachmann einfach ableiten. Fig. 2 ist eine Querschnittsdarstellung, in welcher die Einzelteile der Messlehre 01 besser erkennbar sind.

Die Messlehre 01 umfasst eine erste Messscheibe 02, eine zweite Messscheibe 03 und eine dritte Messscheibe 04. Die Messscheiben 02, 03, 04 sind konzentrisch und gegeneinander verdrehbar angeordnet und im Zentrum 05 durch einen Niet 06, einen Druckknopf oder ein ähnliches die Drehachse bildendes Element verbunden.

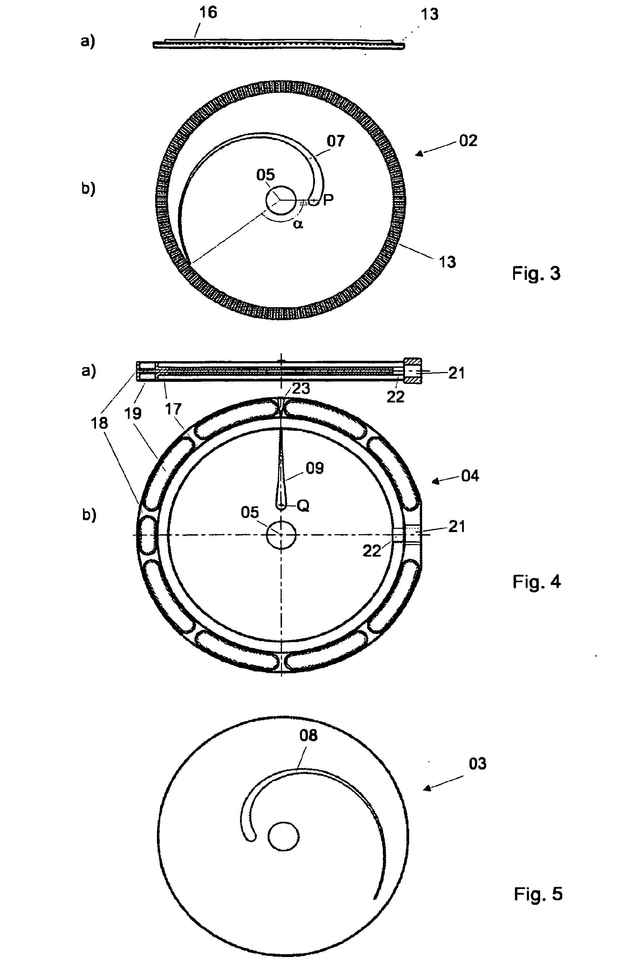

Die erste und zweite Messscheibe 02, 03 weisen jeweils einen, sich nach außen hin verjüngenden, spiralförmigen Schlitz 07, 08 auf. Die dritte Messscheibe 04 weist einen (hier nicht dargestellten) radial verlaufenden Schlitz 09 (siehe Fig. 4) auf, der sich ebenfalls nach außen hin verjüngt. Die Kanten der Schlitze 07, 08, 09 sind vorzugsweise abgerundet, damit nicht versehentlich ein oder mehrere Einzeldrähte der Litzenleitung beim Verdrehen der Messscheiben 02, 03 abgeschnitten oder beschädigt werden. Die erste und zweite Messscheibe 02, 03 sind spiegelsymmetrisch zueinander angeordnet und die dritte Messscheibe 04 befindet sich in der Symmetrieebene zwischen erster und zweiter Scheibe.

Weiterhin umfasst die Messlehre 01 ein Handrädchen 11 mit einem Ritzel 12. Das Ritzel 12 greift in jeweils eine Zahnreihe 13, 14 der ersten bzw. zweiten Messscheibe 03 bzw. 04 ein, wobei die Zahnreihen 13, 14 kreisförmig an den innen liegenden einander zugewandten Seiten der ersten bzw. zweiten Messscheibe 02 bzw. 03 vorgesehen sind. Wird das Handrädchen 11 gedreht, so werden die außen liegenden Messscheiben 02 und 03 gegenläufig zueinander verdreht, und zwar entsprechend der Übersetzung, die durch die Zahnreihen 13, 14 und das darin eingreifende Ritzel 12 bestimmt ist.

Sofern auf der ersten und der zweiten Messscheibe unterschiedliche Spirallängen vorgesehen werden, ist die Zahnung der Zahnreihen entsprechend unterschiedlich zu dimensionieren, so dass bei einer Verdrehung jeweils die gewünschte Öffnung verbleibt, die durch die sich überdeckenden Schlitze gebildet wird. Hiefür sind getrennte Antriebsräder vorzusehen.

In den Fig. 3 bis 5 sind die einzelnen Messscheiben 02, 04 und 03 einzeln dargestellt, und zwar entspricht die Figurenreihenfolge der Reihenfolge der aufeinander gelegten Messscheiben 02, 04, 03. Die hier dargestellte Reihenfolge der Messscheiben ergibt sich aus konstruktiven Gründen, ist aber nicht vorgeschrieben.

Fig. 3 zeigt dabei in Abb. a) eine Seitenansicht und in Abb. b) die Innenseite der ersten Messscheibe 02. Die Zahnreihe 13 ist auf der Innenseite der ersten Messscheibe 02 am äußeren Rand vorgesehen und gegenüber einer Grundfläche 16 abgesetzt. Der Zahnabstand ist auf das gewünschte Übersetzungsverhältnis und das Ritzel 11 abgestimmt. Der spiralförmige Schlitz 07 verläuft ausgehend vom einem zentrumsnahen Punkt P entgegen dem Uhrzeigersinn mit abnehmender Breite über einen Winkel α von etwa 220°. Durch eine mögliche Verlängerung können der Messbereich oder die Auflösung geändert werden.

Fig. 4 zeigt die dritte Messscheibe 04 in Abb. a) als Querschnitt und in Abb. b) als Draufsicht. In Abb. b) ist der Verlauf des radial verlaufenden Schlitzes 09 erkennbar. Der Schlitz 09 verläuft ausgehend von einem zentrumsnahen Punkt Q in radialer Richtung nach außen. Dabei verringert sich seine Breite in dessen Verlauf. An der Außenseite der dritten Messscheibe schließt sich über einen erhabenen Abschnitt 17 ein Griffrand 18 mit mehreren Vertiefungen 19 an. An einer Stelle des Umfangs ist ein Durchbruch 21 in radialer Richtung vorgesehen, durch welchen bei der Montage der Messlehre 01 das Handrädchen 11 einführbar ist. An der gleichen Stelle des Umfangs weist der erhabene Abschnitt 17 einen axialen Durchbruch 22 auf, worin das Ritzel 12 in antriebswirksamer Verbindung mit dem Handrädchen 11 positioniert wird. Am Griffrand 18 ist weiterhin eine Markierung 23 vorgesehen, an welcher der Leiterquerschnitt auf der zweiten Messscheibe 03 ablesbar ist.

Fig. 5 zeigt die zweite Messscheibe 03 in einer Draufsicht auf die außen liegende Seite. Sie ist in dieser Ausführungsform baugleich zur ersten Messscheibe 02 ausgeführt, deshalb wird hier auf eine weiter Erläuterung verzichtet.

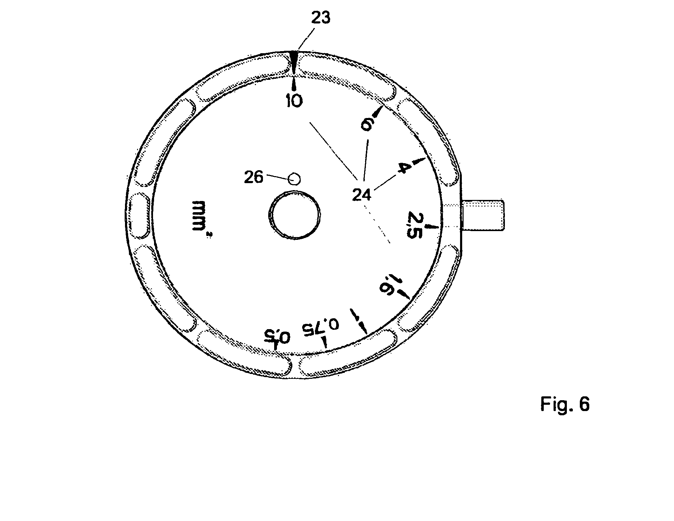

In Fig. 6 ist die erfindungsgemäße Messlehre 01 mit einer auf der zweiten Messscheibe 03 aufgebrachten Maßverkörperung 24 gezeigt. In dieser Ansicht ist die verbleibende Öffnung 26 zu erkennen. Dem jeweils verbleibenden Öffnungsquerschnitt 26, sind durch die Maßverkörperung 24 die resultierenden Leiterquerschnitte zugeordnet. Diese können an der Markierung 23 abgelesen werden. Mit weiterem Verdrehen der Messscheiben 02, 03 "wandert" die verbleibende Öffnung 26 nach außen, entsprechend des radialen Schlitzes 09 in der dritten Messscheibe 04. Der jeweils der Markierung 23 gegenüberliegend dargestellte Wert der Maßverkörperung 24 entspricht dem Leiterquerschnitt einer exakt in die sich jeweils einstellende Öffnung 26 passenden Litze. Für die Verwendung als Messlehre zur Ermittlung des Leiterquerschnittes genügt es, die in der Industrie tatsächlich verwendeten Leiterquerschnitte an der Maßverkörperung aufzutragen. Der jeweils der Markierung 23 nächstliegend gegenüberstehende Wert, ist mit hinreichender Genauigkeit der ermittelte Querschnitt der eingesetzten Litze.

Denkbar wären auch farbliche oder andere Markierungen entlang des spiralförmigen Schlitzes 07 auf der ersten Messscheibe 02, welche direkt den Leiterquerschnitt bzw. den benötigten Crimpkontakt repräsentieren.

### Bezugszeichenliste

- 01 -: Messlehre
- 02 -: Messscheibe, erste
- 03 -: Messscheibe, zweite
- 04 -: Messscheibe, dritte
- 05 -: Zentrum
- 06 -: Niet
- 07 -: Schlitz, spiralförmig
- 08 -: Schlitz, spiralförmig
- 09 -: Schlitz, radial
- 10 -: -
- 11 -: Handrädchen
- 12 -: Ritzel
- 13 -: Zahnreihe
- 14 -: Zahnreihe
- 15 -: -
- 16 -: Grundfläche
- 17 -: erhabener Abschnitt
- 18 -: Griffrand
- 19 -: Vertiefung
- 20 -: -
- 21 -: Durchbruch
- 22 -: Durchbruch
- 23 -: Markierung
- 24 -: Maßverkörperung
- 25 -: -
- 26 -: Öffnung

## Patentansprüche

1. Messlehre (01) zur Bestimmung eines Durchmessers oder einer Querschnittsfläche eines im Querschnitt verformbaren Objektes mit
- einer ersten Messscheibe (02), welche einen spiralförmigen Schlitz (07) aufweist, der um das Zentrum (05) der Messscheibe (02) verläuft und sich stetig verjüngt;
- einer zweiten Messscheibe (03), welche einen stetig von der Zentrumsnähe zum Rand verlaufenden Schlitz aufweist, welcher sich in der gleichen Richtung verjüngt, wie der Schlitz (07) der ersten Messscheibe (02);
- einer Maßverkörperung (24) zum Ablesen des ermittelten Maßes, welche auf einer der beiden Messscheiben vorgesehen ist;
wobei die Messscheiben (02, 03) mit einer zentralen axialen Verbindung (06) übereinander liegend angeordnet und gegeneinander verdrehbar sind, wobei die Schlitze der Messscheiben abschnittsweise in Überdeckung bringbar sind, sodass sie eine durchgehende Öffnung (26) freigeben, in die das auszumessende Objekt einführbar ist, und wobei durch ein Verdrehen der Messscheiben (02, 03) gegeneinander die lichte Weite der Öffnung (26) veränderbar ist und an der Maßverkörperung (24) der Durchmesser und/oder die Querschnittsfläche der jeweils verbleibenden Öffnung (26) ablesbar ist.

2. Messlehre (01) nach Anspruch 1, **dadurch gekennzeichnet, dass** die zweite Messscheibe (03) ebenfalls einen spiralförmigen Schlitz aufweist, wobei die spiralförmigen Schlitze eine unterschiedliche Länge haben, wobei die Messscheiben (02,03) derart angeordnet sind, dass die spiralförmigen Schlitze gegenläufig verlaufen, und die Öffnung (26) eine im Wesentlichen viereckige Form hat.

3. Messlehre (01) nach Anspruch 1, **dadurch gekennzeichnet, dass** die erste und die zweite Messscheibe (02, 03) einen deckungsgleichen spiralförmigen Schlitz (07, 08) aufweisen, wobei sie spiegelsymmetrisch zueinander angeordnet sind, wodurch die Öffnung (26) eine im Wesentlichen viereckige Form hat.

4. Messlehre (01) nach Anspruch 2 oder 3, **dadurch gekennzeichnet, dass** sie eine dritte Messscheibe (04) umfasst, welche einen radial verlaufenden Schlitz (09) aufweist, welcher sich in der gleichen Richtung verjüngt, wie die Schlitze (07, 08) der ersten und zweiten Messscheibe (02, 03), wobei die Öffnung (26) bei einer gegenläufigen Verdrehung der ersten und zweiten Messscheibe (02, 03) eine im Wesentlichen sechseckige Form aufweist.

5. Messlehre (01) nach einem der Ansprüche 1 bis 4, **dadurch gekennzeichnet, dass** die Maßverkörperung (24) an der ersten Messscheibe (02) vorgesehen ist.

6. Messlehre (01) nach einem der Ansprüche 1 bis 5, **dadurch gekennzeichnet, dass** sich der Schlitz (07) der ersten Messscheibe (02) über maximal eine Umdrehung (360°) der Scheibe erstreckt.

7. Messlehre (01) nach Anspruch 6, **dadurch gekennzeichnet, dass** sich der Schlitz (07) der ersten Messscheibe (02) über einen Winkel α=220° erstreckt.

8. Messlehre (01) nach einem der Ansprüche 1 bis 7, **dadurch gekennzeichnet, dass** sie weitere Messscheiben mit jeweils einem spiralförmigen Schlitz umfasst, wobei die verbleibende Öffnung (26) einen polygonalen Querschnitt besitzt.

9. Messlehre (01) nach einem der Ansprüche 1 bis 8, **dadurch gekennzeichnet, dass** sich die Breite der Schlitze (07, 08, 09) in den Messscheiben (02, 03, 04) vom größten zu messenden Objektquerschnitt bis zum kleinsten zu messenden Objektquerschnitt stetig verjüngt.

10. Messlehre (01) nach einem der Ansprüche 1 bis 9, **dadurch gekennzeichnet, dass** die Messscheiben (02, 03, 04) Halteabschnitte umfassen, welche am äußeren Umfang angeordnet sind.

11. Messlehre (01) nach einem der Ansprüche 1 bis 10, **dadurch gekennzeichnet, dass** sie weiterhin einen Antrieb und eine Getriebeeinheit zur Verdrehung der Messscheiben umfasst.

12. Messlehre (01) nach Anspruch 11, **dadurch gekennzeichnet, dass** der Antrieb ein Handrädchen (11) ist und die Getriebeeinheit ein Antriebsritzel (12) umfasst, welches am Handrädchen (11) antriebswirksam angeordnet ist und in jeweils eine Zahnreihe (13, 14), welche außen kreisförmig auf der nach innen gewandten Seite der ersten (02) bzw. der zweiten Messscheibe (03) angeordnet ist, eingreift.

13. Messlehre (01) nach einem der Ansprüche 1 bis 12, **dadurch gekennzeichnet, dass** eine der Messscheiben einen weiteren Durchbruch umfasst, welcher eine scharfe Kante aufweist, so dass beim Verdrehen der Messscheiben eine Scherwirkung am in den weiteren Durchbruch eingeführten Objekt eintritt.

14. Verfahren zur Messung einer Querschnittsfläche eines im Querschnitt verformbaren Objektes, folgende Schritte umfassend:
- konzentrische Anordnung mindestens zweier Messscheiben (02, 03), wobei eine erste Messscheibe (02) einen sich verjüngenden spiralförmig verlaufenden Schlitz (07) aufweist und eine zweite Messscheibe (03), die der ersten Messscheibe parallel gegenüberliegt, einen sich in der gleichen Richtung verjüngenden stetig verlaufenden Schlitz aufweist und sich überdeckende Abschnitte der Schlitze des Messscheiben eine durchgehende Öffnung (26) freigeben;
- Einführen des Messobjektes in die Öffnung (26);
- Verdrehen der Messscheiben (02, 03) gegeneinander, solange, bis sich die Öffnung (26) so weit verkleinert hat, dass das Messobjekt in der Öffnung (26) festgeklemmt ist;
- Ablesen der Querschnittsfläche oder des Durchmessers an einer auf einer der Messscheiben (02,03) angebrachten Maßverkörperung (24).

15. Messlehre (01) zur Bestimmung eines Durchmessers oder einer Querschnittsfläche eines im Querschnitt verformbaren Objektes mit
- einer ersten Messscheibe, welche einen linearen Schlitz aufweist, der in einer ersten Richtung verläuft und sich stetig verjüngt;
- einer zweiten Messscheibe, welche einen linearen Schlitz aufweist, der in einer zweiten Richtung verläuft und sich stetig verjüngt;
- einer Maßverkörperung (24) zum Ablesen des ermittelten Maßes, welche auf einer der beiden Messscheiben vorgesehen ist;
wobei die beiden Messscheiben übereinander liegend angeordnet und gegeneinander verschiebbar sind, wobei die Schlitze der Messscheiben abschnittsweise in Überdeckung bringbar sind, sodass sie eine durchgehende Öffnung freigeben, in die das auszumessende Objekt einführbar ist, und wobei durch ein Verschieben der beiden Messscheiben gegeneinander die lichte Weite der Öffnung veränderbar ist und an der Maßverkörperung der Durchmesser und/oder die Querschnittsfläche der jeweils verbleibenden Öffnung ablesbar ist.

## Claims

1. Measuring gauge (01) for determining a diameter or a cross sectional area of an object whose cross section can be adjusted, with
- a first measuring disk (02), which has a helical slot (07) that runs about the center (05) of the measuring disk (02) and which steadily tapers down;
- a second measuring disk (03), which has a slot running constantly from the area of the center to the edge, which tapers down in the same direction as the slot (07) of the first measuring disk (02);
- a material measure (24) for reading out the measure determined, which is provided on one of the two measuring disks;
with the measuring disks (02, 03) being placed one atop the other with a central axial connection (06) and able to counter-rotate to each other, with the slots of the measuring disks able to be applied by sections in overlap, so that they leave a through-running opening (26) into which the object to be measured can be inserted, and through counterrotation of the measuring disks (02, 03) to each other, the width in the clear of the opening (26) can be altered, and on the material measure (24) the diameter and/or the cross sectional area of the particular remaining opening (26) can be read out.

2. Measuring gauge (01) according to claim 1, **characterized in that** the second measuring disk (03) likewise has a helical slot, with the helical slots having a differing length, with the measuring disks (02, 03) so placed that the helical slots run counter to each other, and the opening (26) has an essentially rectangular shape.

3. Measuring gauge (01) according to claim 1, **characterized in that** the first and the second measuring disk (02, 03) have a congruent helical slot (07, 08), with them being placed in specular symmetry to each other, through which the opening (26) essentially has a rectangular form.

4. Measuring gauge (01) according to claim 2 or 3, **characterized in that** it comprises a third measuring disk (04) that has a radially-running slot (09), which tapers down in the same direction as the slots (07, 08) of the first and second measuring disks (02, 03), with the opening (26) having an essentially hexagonal shape when the first and second measuring disks (02, 03) are counter-rotated to each other.

5. Measuring gauge (01) according to one of claims 1 to 4, **characterized in that** the material measure (24) is provided on the first measuring disk (02).

6. Measuring gauge (01) according to one of claims 1 to 5, **characterized in that** the slot (07) of the first measuring disk (02) extends at maximum over one revolution (360°) of the disk.

7. Measuring gauge (01) according to claim 6, **characterized in that** the slot (07) of the first measuring disk (02) extends over an angle α = 220°.

8. Measuring gauge (01) according to one of claims 1 to 7, **characterized in that** it comprises additional measuring disks each with a helical slot, with the remaining opening (26) having a polygonal cross section.

9. Measuring gauge (01) according to one of claims 1 to 8, **characterized in that** the width of the slots (07, 08, 09) in the measuring disks (02, 03, 04) constantly tapers down from the largest object cross section to be measured to the smallest object cross section to be measured.

10. Measuring gauge (01) according to one of claims 1 to 9, **characterized in that** the measuring disks (02, 03, 04) comprise holding sections, which are placed on the outer edge.

11. Measuring gauge (01) according to one of claims 1 to 10, **characterized in that** additionally they comprise a drive and a transmission unit for rotation of the measuring disks.

12. Measuring gauge (01) according to claim 11, **characterized in that** the drive is a manual wheel (11) and the transmission unit comprises a drive pinion (12) which is attached onto the manual wheel (11) so as to act as a drive, and engages into each row of teeth (13, 14) which are placed in circular fashion on the inward-facing side of the first (02) or of the second measuring disk (03).

13. Measuring gauge (01) according to one of claims 1 to 12, **characterized in that** one of the measuring disks has an additional aperture which has a sharp edge, so that when the measuring disks are rotated, the object inserted into the additional aperture is subject to a shearing action.

14. Procedure for measurement of a cross-sectional surface of an object whose cross section can be altered, comprising the following steps:
- concentric placement of at least two measuring disks (02, 03) with a first measuring disk (02) having a tapering helical slot (07) and a second measuring disk (03), that lies opposite and parallel to the first measuring disk, having a steadily running slot that tapers down in the same direction and overlapping sections of the slots of the measuring disks leave open a through-running opening (26);
- insertion of the measured object into the opening (26);
- counter-rotation of the measuring disks (02, 03) to each other until the opening (26) has become small enough that the measured object is securely clamped in the opening (26);
- readout of the cross sectional area or of the diameter on a material measure (24) attached to one of the measuring disks (02, 03).

15. Measuring gauge (01) for determining a diameter or a cross sectional area of an object whose cross section can be adjusted, with
- a first measuring disk which has a linear slot, that runs in a first direction and steadily tapers down;
- a second measuring disk, which has a linear slot running in a second direction, which tapers down steadily;
- a material measure (24) for reading out the measure determined, which is provided on one of the two measuring disks;
with the two measuring disks being placed one atop the other and able to be adjusted against each other, with the slots of the measuring disks able to be applied by sections in overlap, so that they leave a through-running opening into which the object to be measured can be inserted, and through adjustment of the measuring disks to each other, the width in the clear of the opening can be altered, and on the material measure the diameter and/or the cross sectional area of the particular remaining opening can be read out.

## Revendications

1. Gabarit de mesure (01) pour déterminer un diamètre ou une surface de section d'un objet déformable en section comprenant
- un premier disque de mesure (02), qui présente une fente (07) en forme de spirale, qui est agencée autour du centre (05) du disque de mesure (02) et se rétrécit constamment ;
- un second disque de mesure (03) qui présente une fente s'étendant constamment depuis la proximité du centre vers le bord, qui se rétrécit dans la même direction que la fente (07) du premier disque de mesure (02) ;
- une mesure matérialisée (24) pour la lecture de la mesure déterminée, qui est prédéfinie sur l'un des deux disques de mesure (02) ;
les disques de mesure (02, 03) étant disposés l'un au-dessus de l'autre avec une liaison (06) axiale centrale et pouvant tourner l'un par rapport à l'autre, les fentes des disques de mesure pouvant être amenées en recouvrement par tronçons, de sorte qu'elles libèrent une ouverture (26) continue dans laquelle l'objet à mesurer peut être introduit, et la largeur intérieure de l'ouverture (26) pouvant être modifiée par une rotation des disques de mesure (02, 03) l'un par rapport à l'autre et le diamètre et/ou la surface de section de l'ouverture (26) respectivement restante pouvant être relevés sur la mesure matérialisée (24).

2. Gabarit de mesure (01) selon la revendication 1, **caractérisé en ce que** le second disque de mesure (03) présente également une fente en forme de spirale, les fentes en forme de spirale ayant une longueur différente, les disques de mesure (02, 03) étant disposés de telle sorte que les fentes en forme de spirale s'étendent dans le sens contraire, et l'ouverture (26) a une forme sensiblement carrée.

3. Gabarit de mesure (01) selon la revendication 1, **caractérisé en ce que** le premier et le second disques de mesure (02, 03) présentent une fente (07, 08) en forme de spirale et coïncidente, lesquelles fentes sont disposées de façon symétrique l'une par rapport à l'autre, l'ouverture (26) ayant une forme sensiblement carrée.

4. Gabarit de mesure (01) selon la revendication 2 ou 3, **caractérisé en ce qu'**il comporte un troisième disque de mesure (04), qui présente une fente (09) agencée radialement, laquelle se rétrécit dans la même direction que les fentes (07, 08) du premier et du second disques (02, 03), l'ouverture (26) présentant une forme sensiblement hexagonale lors d'une rotation contraire des premier et second disques de mesure (02, 03).

5. Gabarit de mesure (01) selon l'une quelconque des revendications 1 à 4, **caractérisé en ce que** la mesure matérialisée (24) est prévue sur le premier disque de mesure (02).

6. Gabarit de mesure (01) selon l'une quelconque des revendications 1 à 5, **caractérisé en ce que** la fente (07) du premier disque de mesure (02) s'étend sur au maximum une rotation (360°) du disque.

7. Gabarit de mesure (01) selon la revendication 6, **caractérisé en ce que** la fente (07) du premier disque de mesure (02) s'étend sur un angle α = 220°.

8. Gabarit de mesure (01) selon l'une quelconque des revendications 1 à 7, **caractérisé en ce qu'**il comprend d'autres disques de mesure dotés chacun d'une fente en forme de spirale, l'ouverture (26) restante ayant une section polygonale.

9. Gabarit de mesure (01) selon l'une quelconque des revendications 1 à 8, **caractérisé en ce que** la largeur des fentes (07, 08, 09) dans les disques de mesure (02, 03, 04) se rétrécit depuis la plus grande section à mesurer jusqu'à la plus petite section d'objet à mesurer.

10. Gabarit de mesure (01) selon l'une quelconque des revendications 1 à 9, **caractérisé en ce que** les disques de mesure (02, 03, 04) comportent des parties de retenue qui sont disposées sur le pourtour extérieur.

11. Gabarit de mesure (01) selon l'une quelconque des revendications 1 à 10, **caractérisé en ce qu'**il comporte également un entraînement et une unité d'engrenages pour la rotation des disques de mesure.

12. Gabarit de mesure (01) selon la revendication 11, **caractérisé en ce que** l'entraînement est un petit volant (11) et l'unité d'engrenages comporte un pignon d'entraînement (12), qui est disposé sur le petit volant (11) de façon efficace en entraînement et s'engage dans respectivement une série de dents (13, 14), laquelle est disposée à l'extérieur de façon circulaire sur le côté, tourné vers l'intérieur, du premier disque de mesure (02) ou du second disque de mesure (03).

13. Gabarit de mesure (01) selon l'une quelconque des revendications 1 à 12, **caractérisé en ce que** l'un des disques de mesure comporte un autre percement qui présente une arête tranchante, de sorte qu'un effet de cisaillement survient sur l'objet introduit dans l'autre percement lors de la rotation des disques de mesure.

14. Procédé pour mesurer une surface de section d'un objet déformable en section, comprenant les étapes suivantes :
- agencement concentrique d'au moins deux disques de mesure (02, 03), un premier disque de mesure (02) présentant une fente (07) se rétrécissant et agencée en forme de spirale et un second disque de mesure (03), qui fait face parallèlement au premier disque de mesure, présentant une fente s'étendant toujours en se rétrécissant dans la même direction et des parties se recouvrant des fentes des disques de mesure libérant une ouverture (26) continue ;
- introduction de l'objet de mesure dans l'ouverture (26) ;
- rotation des disques de mesure (02, 03) l'un par rapport à l'autre, jusqu'à ce que l'ouverture (26) se réduise au point que l'objet à mesurer est coincé dans l'ouverture (26) ;
- mesure de la surface de section ou du diamètre sur une mesure matérialisée (24) placée sur l'un des disques de mesure (02, 03).

15. Gabarit de mesure (01) pour déterminer un diamètre ou une surface de section d'un objet déformable en section comprenant
- un premier disque de mesure, qui présente une fente linéaire qui est agencée dans une première direction et se rétrécit constamment ;
- un second disque de mesure qui présente une fente linéaire qui est agencée dans une seconde direction et se rétrécit constamment ;
- une mesure matérialisée (24) pour la lecture de la mesure déterminée, qui est prévue sur l'un des deux disques de mesure ;
les deux disques de mesure étant disposés de façon superposée et pouvant coulisser l'un par rapport à l'autre, les fentes des disques de mesure pouvant être amenées en recouvrement par tronçons, de sorte qu'elles libèrent une ouverture continue dans laquelle l'objet à mesurer peut être introduit, et la largeur intérieure de l'ouverture pouvant être modifiée par un déplacement des deux disques de mesure l'un par rapport à l'autre et le diamètre et/ou la surface de section de l'ouverture respectivement restante pouvant être relevés sur la mesure matérialisée
